# EUROPÄISCHE PATENTSCHRIFT

(11) **EP 2 806 214 B1**
(45) Veröffentlichungstag und Bekanntmachung des Hinweises auf die Patenterteilung: **07.09.2016**
(21) Anmeldenummer: 13169132.1
(22) Anmeldetag: 24.05.2013
(51) Int. Cl.: F23L 1/00, F23L 15/04, F23B 50/06, F23B 90/02, F23B 90/04, F23L 3/00, F23L 9/04

(54) **Heizkessel**
Boiler
Chaudière

(43) Veröffentlichungstag der Anmeldung: 26.11.2014
(73) Patentinhaber: Fröling Heizkessel- und Behälterbau, Gesellschaft m.b.H, 4710 Grieskirchen (AT)
(72) Erfinder: Hutterer, Ernst, 4710 Grieskirchen (AT)
(74) Vertreter: Jell, Friedrich

(56) Entgegenhaltungen:
- EP-A1- 2 246 625
- EP-A2- 2 221 534
- EP-A2- 2 495 497
- DE-U1-202008 012 806

## Beschreibung

Die Erfindung betrifft einen Heizkessel mit einem, eine Füllöffnung aufweisenden Füllraum für Heizgut, mit einer die Füllöffnung verschließbaren Füllraumtür und mit einer Luftzuführung, die eine Verteileinrichtung und Primär- und Sekundärluftkanäle aufweist, die an die Verteileinrichtung angeschlossenen sind, wobei die Verteileinrichtung ein beweglich gelagertes Stellorgan zum gemeinsamen Einstellen der Luftmengen für den Sekundärluftkanal und für den in den Füllraum mündenden Primärluftkanal aufweist.

Dokument EP2221534 zeigt einen derartigen Heizkessel und offenbart im Zusammenhang den Merkmale des Oberbegriffs des Anspruchs 1.

Um eine konstruktiv vereinfachte Zuluft-Steuerung für einen Heizkessel zu ermöglichen, ist es aus dem Stand der Technik bekannt (DE102006011251A, AT399572B), die Luftmenge von Primär- und Sekundärluftkanal mithilfe eines zentralen Stellorgans einer Verteileinrichtung gemeinsam einzustellen. Als Stellorgan sind linear oder radial verstellbare Stellschieber bekannt, die die Öffnungsquerschnitte von Primär- und Sekundärluftkanal verändern, um so die Verbrennung des Heizguts im Füllraum des Heizkessels zu steuern. Diese vereinfachte automatische Steuerung des Betriebs des Kessels geht jedoch mit Nachteilen beim Anheizen einher. Hier muss über ein manuelles Öffnen der Füllraumtür für eine ausreichende Luftmenge gesorgt werden. Neben dieser umständlichen Handhabung beim Anheizen ist bei offener Füllraumtür auch mit einem Austreten von Verbrennungsgasen zu rechnen. Zudem bleibt die Füllraumtür oftmals zu lange geöffnet, was den Wirkungsgrad des Heizkessels erheblich verschlechtert.

Um ein länger andauerndes manuelles Öffnen einer zusätzlichen, zum Zwecke des Anheizens vorgesehenen Tür eines Heizkessels zu vermeiden, schlägt die DE202008012806U1 vor, vom Primärluftkanal automatisch Luftmengen abzutrennen und diese Luft unterhalb einer Anheiztür in den Füllraum einzubringen. Um den Heizkessel nach dem Anheizen in seinen Last- bzw. Teillastbetrieb überführen zu können, wird weiter vorgeschlagen, im Primärluftkanal einstellbare Drosselstellen vorzusehen, um damit die abgetrennte Anheizluftmenge zu reduzieren. Allerdings bedarf eine derartige Ausführung eines konstruktiven Mehraufwands im Primärluftkanal bzw. in der Luftzuführung.

Die Erfindung hat sich daher die Aufgabe gestellt, ausgehend vom eingangs geschilderten Stand der Technik einen Heizkessel zu schaffen, der trotz konstruktiver Einfachheit einen hohen Automatismus zur Verfügung stellen kann. Zudem soll der Heizkessel schnell von seiner Anheizphase in den Betrieb überführbar sein, sodass in weiterer Folge auch einen vergleichsweise hoher Wirkungsgrad erreicht wird.

Die Erfindung löst die gestellte Aufgabe dadurch, dass die Luftzuführung zusätzlich einen in den Füllraum mündenden und an die Verteileinrichtung angeschlossen Anheizluftkanal aufweist, der mit dem beweglichen Stellorgan der Verteileinrichtung zum gemeinsamen Einstellen der Luftmengen für Anheiz-, Primär- und Sekundärluftkanal verbunden ist.

Weist die Luftzuführung zusätzlich einen in den Füllraum mündenden und an die Verteileinrichtung angeschlossen Anheizluftkanal auf, kann zunächst unabhängig von den Luftmengen im Primär- und Sekundärluftkanal für eine stets ausreichende Anheizluftmenge im Füllraum gesorgt werden, um auch während des Anheizens eine hohe Automation des Heizkessels zu gewährleisten. Ist der Anheizluftkanal mit dem beweglichen Stellorgan der Verteileinrichtung verbunden und dient dies zur gemeinsamen Einstellen der Luftmengen für Anheiz-, Primär- und Sekundärluftkanal, kann zudem der konstruktive Mehraufwand am Heizkessel zum Steuern der diesbezüglichen Luftmenge in Grenzen gehalten werden. Der erfindungsgemäße Heizkessel kann sich daher gegenüber anderen Lösungen, die Drosseleinrichtungen im Primärluftkanal etc. vorschlagen, durch seine konstruktive Einfachheit auszeichnen. Zudem kann der angeheizte Kessel mithilfe einer derartigen zentralen Steuerung schnell in den Betrieb übergeführt werden, womit auch ein vergleichswese hoher Wirkungsgrad sicherzustellen ist. Außerdem kann durch dieses gemeinsame Stellorgan aufgrund der reduzierten Anzahl an Steuerelementen die Gefahr von Defekten und Störungen des Heizkessels reduziert werden, womit auch eine hohe Standfestigkeit am Heizkessel sicherzustellen ist.

Ist das Stellorgan als drehbar gelagerter Stellschieber zum gemeinsamen Einstellen der Luftmengen für Anheiz-, Primär- und Sekundärluftkanal entsprechend seiner Drehlage ausgebildet, bedarf es für das Stellorgan keiner konstruktiv aufwendigen Lagerung. Beispielsweise kann zur Lagerung des Stellorgans bereits eine Motorwelle ausreichend sein. Des Weiteren kann durch eine Verwendung einer vorzugsweise plattenförmigen Ausführung des Stellschiebers eine besonders kompakte Verteileinrichtung geschaffen werden.

Der konstruktive Aufwand an der Verteileinrichtung kann sich weiter reduzieren, wenn die Verteileinrichtung eine Verteilerplatte aufweist, die für den Anheiz-, Primär- und Sekundärluftkanal Anschlussöffnungen ausbildet. Über die Verteilerplatte kann nämlich der Öffnungsquerschnitt zu den Anheiz-, Primär- und Sekundärluftkanälen eingestellt werden, sodass diese Kanäle konstruktiv einfach an die Verteileinrichtung herangeführt und angeschlossen werden können. Zudem kann eine gemeinsame Verteilerplatte auch - etwa hinsichtlich temperaturbedingter Wärmespannungen - erhöhte mechanische Belastbarkeit gewährleisten, was zur Verbesserung der Standfestigkeit und Betriebssicherheit des Heizkessels beitragen kann.

Weist das Stellorgan Ausnehmungen auf, die mit den Anschlussöffnungen der Verteilerplatte zum Einstellen der von Anheiz-, Primär- und Sekundärluftkanal geführten Luftmengen zusammenwirken, ist der Öffnungsgrad der Kanäle und damit der von diesen geführten Luftmengen auf konstruktiv einfache Weise einstellbar.

Geräuschentwicklung im Bereich des Stellorgans können vermeiden werden, wenn die Verteileinrichtung einen das Stellorgan aufnehmenden Luftkasten aufweist. Außerdem kann mit Hilfe des Luftkastens die Ansaugrichtung entsprechend der konstruktiven Ausgestaltung des Heizkessels ausgerichtet werden, um so für eine ausreichende Luftmenge für Anheiz-, Primär- und Sekundärluftkanal zu sorgen.

Um die Füllraumtür zu kühlen, wird weiter vorgeschlagen, dass die insbesondere doppelwandige Füllraumtür einen ersten Zuluftkanal ausbildet, der mit dem Luftkasten verbunden ist. Die vom Kessel über den Luftkasten angesaugte Luft kann dadurch außerdem vorerwärmt werden, was den Wirkungsgrad des Heizkessels erhöhen kann.

Ein gasdichter und dennoch konstruktiv einfacher Anschluss von Luftkasten und Zuluftkanal kann ermöglicht werden, wenn der Luftkasten einen vorspringenden Flansch ausbildet, an den der erste Zuluftkanal der Füllraumtür angeschlossen ist. Eventuell kann in diesem Bereich auch eine elastische Dichtung vorgesehen sein.

Wird der Luftkasten durch die Verteilerplatte bereichsweise ausgebildet, kann die Konstruktion des Heizkessels weiter vereinfacht werden. Zudem kann über den Luftkasten der Verteilerplatte eine verbesserte Wärmeableitung und somit eine Kühlungsmöglichkeit zur Verfügung gestellt werden. Temperaturbedingte Verwerfungen der Verteilerplatte können so verhindert werden, was die Funktionssicherheit der Verteileinrichtung und damit die Standfestigkeit des Heizkessels erhöht.

Trägt der Luftkasten auf seiner Außenseite eine mit dem Stellorgan wirkverbundene Stelleinrichtung, insbesondere einen Stellmotor, kann die Stelleinrichtung vor Verschmutzungen in Ansaugbereich der Verteileinrichtung geschützt werden. Zudem ist vorstellbar, dass sich die Verkleidung der Füllraumtür über den Stellmotor bzw. über die Stelleinrichtung erstreckt, um damit die Stelleinrichtung nach außen abzudecken und zu schützen. Somit können also selbst bei unsachgemäßer Bedienung der Füllraumtür Beschädigung bzw. Probleme hinsichtlich der Funktion des zentralen Stellschiebers bzw. der Stelleinrichtung vermieden werden, womit ein äußerst standfester Heizkessel geschaffen werden kann.

Weist der Füllraum in seiner vorderen Stirnwand die Füllöffnung und unterhalb der Füllöffnung eine einspringende Leitwand auf, die Mündungsöffnungen für den Anheizluftkanal ausbildet, kann über diese konstruktiv einfache Maßnahme für eine ausreichende Verteilung der Anheizluft im Füllraum gesorgt werden. Der Vorgang des Anheizens kann damit besonders schnell abgeschlossen werden, wodurch der Heizkessel schnell in den Betrieb übergeführt und ein hoher Wirkungsgrad erreichen werden kann.

Der Heizkessel kann einen unteren Abbrand ausbilden, indem dieser eine unterhalb des Füllraums angeordnete Brennkammer aufweist, die in ihrer vorderen Stirnwand eine mit einer Brennkammertür verschließbare Brennkammeröffnung aufweist und die mit dem Füllraum über einen Ansaugkanal verbunden ist, in den die Sekundärluftzuführung mündet.

Nach einer Weiterbildung des Heizkessels können mit einem Vorsehen der Verteileinrichtung zwischen Füllöffnung und Brennkammeröffnung kompakte Bauverhältnisse am Heizkessel ermöglicht werden. Auf diese Weise können sich bei der Anordnung der Verteileinrichtung nämlich vergleichsweise kurz verlaufende Anheiz-, Primär- und Sekundärluftzuführungen ergeben.

Die Brennkammertür kann zudem auf einfache Weise gekühlt werden, indem die insbesondere doppelwandige Brennkammertür einen zweiten Zuluftkanal für die Luftzuführung ausbildet, welcher Zuluftkanal mit dem Luftkasten der Verteileinrichtung verbunden ist.

Bildet der Luftkasten einen vorspringenden zweiten Flansch aus, an den der zweite Zuluftkanal der Brennkammertür angeschlossen ist, kann ein konstruktiv einfacher und besonders gasdichter Anschluss zwischen Luftkasten und zweite Zuluftkanal ermöglicht werden.

In den Figuren ist der Erfindungsgegenstand beispielhaft anhand einer Ausführungsvariante näher dargestellt. Es zeigen
- Fig. 1: eine Frontansicht auf einen Heizkessel,
- Fig. 2: eine Schnittansicht nach II-II der Fig. 1 und
- Fig. 3: eine vergrößerte Teilansicht der Fig. 2.

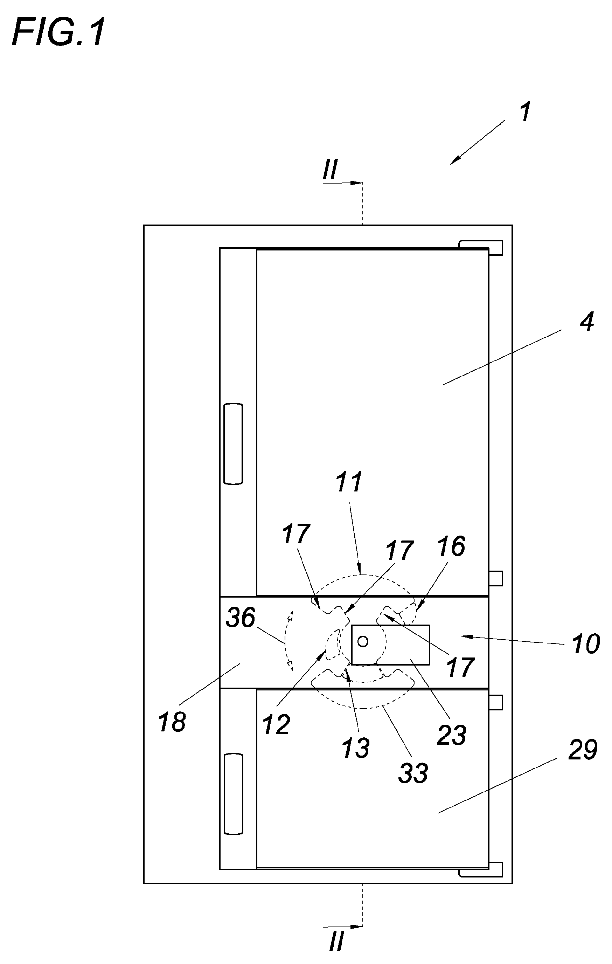

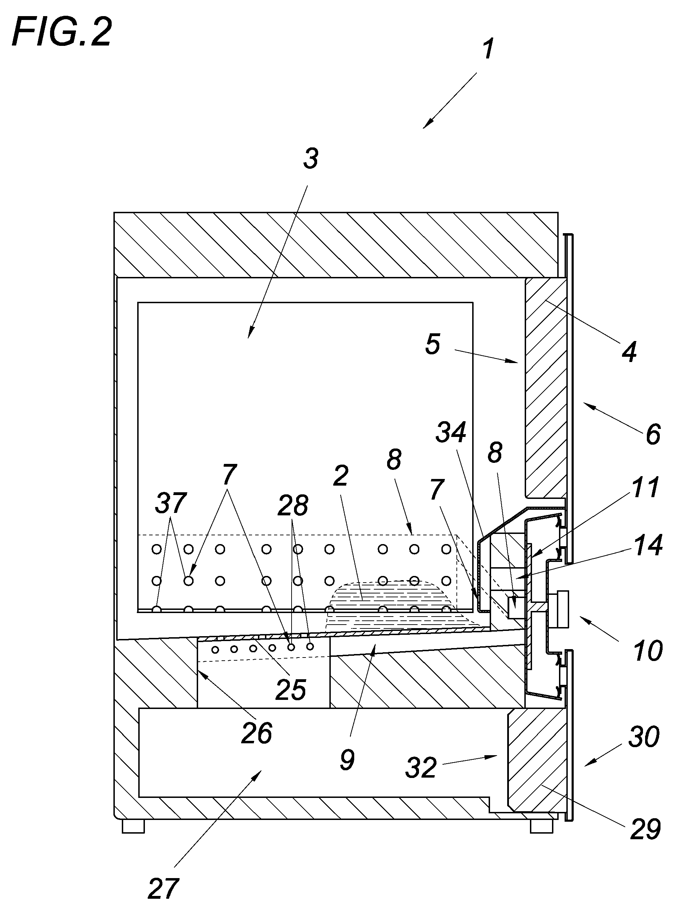

Gemäß den Figuren 1 und 2 wird beispielsweise ein Heizkessel 1 zum Verheizen von Heizgut 2, beispielsweise von Scheitholz, dargestellt. Das Heizgut 2 wird in einem Füllraum 3 des Heizkessels 1 eingebracht, nämlich über eine öffenbare Füllraumtür 4, durch die die Füllöffnung 6 an der vorderen Stirnwand 5 des Füllraums 3 verschlossen wird.

Für die Zufuhr des für die Verbrennung erforderlichen Sauerstoffs sorgt eine Luftzuführung 7 des Heizkessels 1. Diese bildet einen in den Füllraum 3 mündenden Primärluftkanal 8 sowie einen Sekundärluftkanal 9 aus. Beide Kanäle 8 und 9 sind an eine Verteileinrichtung 10 der Luftzuführung 7 angeschlossen. Die Verteileinrichtung 10 weist ein zentrales Stellorgan 11 auf. Über die Lage des zentralen Stellorgans 11 gegenüber der Anschlussöffnung 12 bzw. 13 des Primär- bzw. Sekundärluftkanals 8, 9 an der Verteileinrichtung 10 wird die jeweilige Luftmenge, die über die Kanälen 8, 9 zugeführt wird, eingestellt und der Betrieb des Heizkessels 1 in weiterer Folge gesteuert bzw. geregelt.

Erfindungsgemäß erreicht der Heizkessel 1 selbst in seiner Anheizphase einen vergleichsweise hohen Automatismus, indem die Luftzuführung 7 zusätzlich einen in den Füllraum 3 mündenden Anheizluftkanal 14 ausbildet, der an die Verteileinrichtung 10 getrennt von Primär- und Sekundärluftkanal 8, 9 angeschlossen ist. Das mit dem Anheizluftkanal 14 verbundene Stellorgan 11 wirkt auch hier auf die Luftmenge des Anheizluftkanals 14 ein. Das als drehbar gelagerter Stellschieber 33 ausgebildete Stellorgan 11 stellt nämlich entsprechend seiner jeweiligen Lage bzw. hier Drehlage 36 die Luftmengen für Anheiz-, Primär- und Sekundärluftkanal 14, 8, 9 gemeinsam ein. Ein zentrales Stellorgan 11 reicht damit aus, den Heizkessel 1 in sämtlichen Betriebsmodi exakt zu steuern bzw. zu regeln. Trotz konstruktiver Einfachheit am Heizkessel 1 ist somit dessen erleichterte Bedienung und in weiterer Folge auch dessen verbesserter Wirkungsgrad sichergestellt.

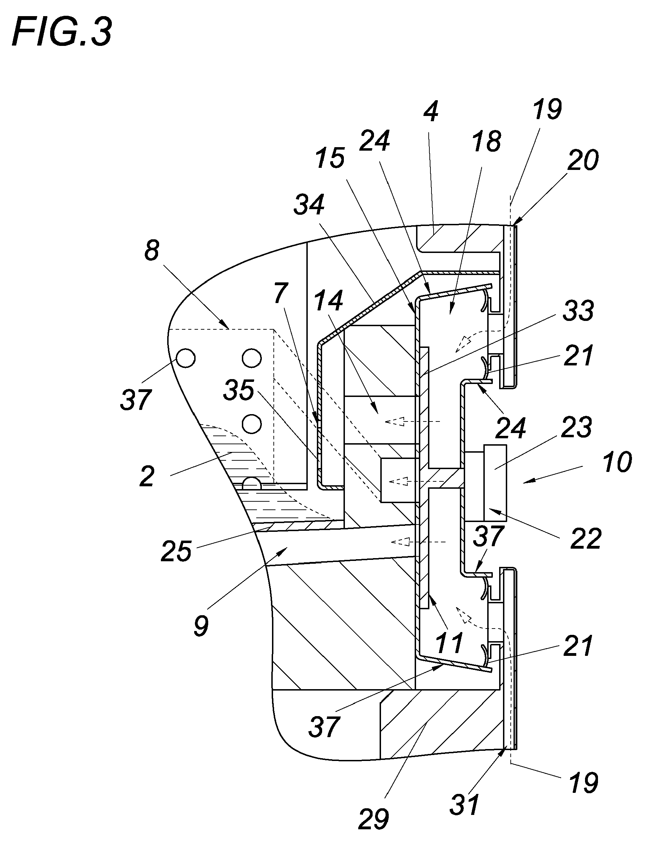

Wie insbesondere der Fig. 3 entnommen werden kann, weist die Verteileinrichtung 10 eine Verteilerplatte 15 auf, die als zentrale Anschlussstelle für Anheiz-, Primär- und Sekundärluftkanal 14, 8, 9 dient. Zudem bildet diese Verteilerplatte 15 auch die Anschlussöffnungen 12, 13, 16 - erkennbar in Figur 1 - aus, was auch die Möglichkeit eröffnet, der jeweiligen Anschlussöffnung 12, 13, 16 unabhängig von der jeweiligen Ausformung ihres Kanals eine individuelle Öffnungskontur vorzugeben.

Zur gemeinsamen Steuerung bzw. Regelung der Luftmengen der Anheiz-, Primär- und Sekundärluftkanäle 14, 8, 9 weist das Stellorgan 11 Ausnehmungen 17 auf. Diese Ausnehmungen 17 wirken mit den Anschlussöffnungen 12, 13, 16 bzw. deren Konturen zusammen und schaffen so einen einfach handzuhabenden Steuerungs- bzw. Regelungsablauf des Heizkessels 1.

Die Verteileinrichtung 10 weist weiter einen Luftkasten 18 auf, der das Stellorgan 11 aufnimmt und durch seine kastenförmige Konstruktion ein Ansaugen von Luft gewährleistet. Dies wird genutzt, um über die Füllraumtür 4 Zuluft 19 anzusaugen und diese Füllraumtür 4 damit zu kühlen. Zu diesem Zweck bildet die doppelwandige Füllraumtür 4 einen ersten Zuluftkanal 20 aus, der entlang der Stirnseite der Füllraumtür 4 verläuft und mit dem Luftkasten 18 dicht verbunden ist - was durch diverse elastische Dichtungen 21 erreicht wird. Des Weiteren wird auf diese Weise die Zuluft 19 vorerwärmt, womit der Wirkungsgrad des Heizkessels 1 zusätzlich erhöht wird.

Kompakte Bauverhältnisse im Bereich der Verteileinrichtung 10 ergeben sich, indem der Luftkasten 18 auf seiner Außenseite die mit dem Stellorgan 11 zum Zwecke dessen Drehbewegung wirkverbundene Stelleinrichtung 22 trägt. Damit ist beispielsweise der Elektroantrieb 23 der Stelleinrichtung 22 sicher befestigt. Zum Schutz der Stelleinrichtung 22 springt der Luftkasten 18 mit zwei Flanschen 24, 37 zur Stelleinrichtung 22 vor. Der erste Flansch 24 dient zudem zum Anschluss des ersten Zuluftkanals 20 der Füllraumtür 4.

Wie in Fig. 2 zu erkennen, bildet der Heizkessel 1 einen unteren Abbrand aus. Zu diesem Zweck werden Verbrennungsgase über einen nicht näher dargestellten Ventilator vom Füllraum 3, durch den Rost 25 und über einen Ansaugkanal 26 in eine mit Schamott ausgekleidete Brennkammer 27 gezogen. In diesen Ansaugkanal 26 mündet über mehrere Mündungsöffnungen 28 die Sekundärluftzuführung 9, um die Verbrennungsgase zu steuern bzw. zu regeln und nachzuverbrennen.

Die Brennkammer 27 weist an ihrer vorderen Stirnwand 32 eine mit einer Brennkammertür 29 verschließbare Brennkammeröffnung 30 auf.

Auch die Brennkammertür 29 wird durch Zuluft 19 gekühlt. Die doppelwandige Brennkammertür 29 bildet - vergleichbar zur Füllraumtür 4 - einen Zuluftkanal 31 aus, der entlang der Stirnseite der Brennkammertür 29 verläuft und mit dem Luftkasten 18 verbunden ist - nämlich mit dessen zweiten vorspringenden Flansch 37. Auch hier ist eine Dichtung 21 vorgesehen, um einen gasdichten Anschluss von Luftkasten und Zuluftkanal 31 zu ermöglichen.

Platzsparend ist die Verteileinrichtung 10 zwischen Füllöffnung 6 und Brennkammeröffnung 30 vorgesehen. Bekanntermaßen mündet der Primärluftkanal 8 mit seinen Mündungsöffnungen 37, die entlang beider Seitenwände des Füllraums 3 vorgesehen sind, in den Füllraum 3 ein.

Das Befüllen des Füllraums 3 mit Heizgut 2 wird durch eine Leitwand 34 im Füllraum 3 erleichtert, dies ist in Fig. 1 und 2 zu sehen. Diese unterhalb der Füllöffnung 6 einspringende Leitwand 34 bildet zudem zum Rost 25 hin gerichtete Mündungsöffnungen 35 für den Anheizluftkanal 14 aus, wodurch das Heizgut 2 besonders schnell angefacht und das Anheizen somit beschleunigt wird.

## Patentansprüche

1. Heizkessel mit einem, eine Füllöffnung (6) aufweisenden Füllraum (3) für Heizgut (2), mit einer die Füllöffnung (6) verschließbaren Füllraumtür (4) und mit einer Luftzuführung (7), die eine Verteileinrichtung (10) und Primär- und Sekundärluftkanäle (8, 9) aufweist, die an die Verteileinrichtung (10) angeschlossenen sind, wobei die Verteileinrichtung (10) ein beweglich gelagertes Stellorgan (11) zum gemeinsamen Einstellen der Luftmengen für den Sekundärluftkanal (9) und für den in den Füllraum (3) mündenden Primärluftkanal (8) aufweist, **dadurch gekennzeichnet, dass** die Luftzuführung (7) zusätzlich einen in den Füllraum (3) mündenden und an die Verteileinrichtung (10) angeschlossen Anheizluftkanal (14) aufweist, der mit dem beweglichen Stellorgan (11) der Verteileinrichtung (10) zum gemeinsamen Einstellen der Luftmengen für Anheiz-, Primär- und Sekundärluftkanal (14, 8, 9) verbunden ist.

2. Heizkessel nach Anspruch 1, **dadurch gekennzeichnet, dass** das Stellorgan (11) als drehbar gelagerter, insbesondere plattenförmiger, Stellschieber (33) zum gemeinsamen Einstellen der Luftmengen für Anheiz-, Primär- und Sekundärluftkanal (14, 8, 9) entsprechend seiner Drehlage (36) ausgebildet ist.

3. Heizkessel nach Anspruch 1 oder 2, **dadurch gekennzeichnet, dass** die Verteileinrichtung (10) eine Verteilerplatte (15) aufweist, die für den Anheiz-, Primär- und Sekundärluftkanal (14, 8, 9) Anschlussöffnungen (12, 13, 16) ausbildet.

4. Heizkessel nach Anspruch 3, **dadurch gekennzeichnet, dass** das Stellorgan (11) Ausnehmungen (17) aufweist, die mit den Anschlussöffnungen (12, 13, 16) der Verteilerplatte (15) zum Einstellen der von Anheiz-, Primär- und Sekundärluftkanal (14, 8, 9) geführten Luftmengen zusammenwirken.

5. Heizkessel nach einem der Ansprüche 1 bis 4, **dadurch gekennzeichnet, dass** die Verteileinrichtung (10) einen das Stellorgan (11) aufnehmenden Luftkasten (18) aufweist.

6. Heizkessel nach Anspruch 5, **dadurch gekennzeichnet, dass** die insbesondere doppelwandige Füllraumtür (4) einen ersten Zuluftkanal (20) ausbildet, der mit dem Luftkasten (18) verbunden ist.

7. Heizkessel nach Anspruch 6, **dadurch gekennzeichnet, dass** der Luftkasten (18) einen vorspringenden Flansch (24) ausbildet, an den der erste Zuluftkanal (20) der Füllraumtür (4) angeschlossen ist.

8. Heizkessel nach Anspruch 5, 6 oder 7, **dadurch gekennzeichnet, dass** der Luftkasten (18) durch die Verteilerplatte (15) bereichsweise ausgebildet wird.

9. Heizkessel nach einem der Ansprüche 5 bis 8, **dadurch gekennzeichnet, dass** der Luftkasten (18) auf seiner Außenseite eine mit dem Stellorgan (11) wirkverbundene Stelleinrichtung (22), insbesondere einen Stellmotor (23), trägt.

10. Heizkessel nach einem der Ansprüche 1 bis 9, **dadurch gekennzeichnet, dass** der Füllraum (3) in seiner vorderen Stirnwand (5) die Füllöffnung (6) und unterhalb der Füllöffnung (6) eine einspringende Leitwand (34) aufweist, die Mündungsöffnungen (35) für den Anheizluftkanal (14) ausbildet.

11. Heizkessel nach einem der Ansprüche 1 bis 10, **dadurch gekennzeichnet, dass** der Heizkessel (1) eine unterhalb des Füllraums (3) angeordnete Brennkammer (27) aufweist, die in ihrer vorderen Stirnwand (32) eine mit einer Brennkammertür (29) verschließbare Brennkammeröffnung (30) aufweist und mit dem Füllraum (3) über einen Ansaugkanal (26) verbunden ist, in den die Sekundärluftzuführung (9) mündet.

12. Heizkessel nach Anspruch 11, **dadurch gekennzeichnet, dass** die Verteileinrichtung (10) zwischen Füllöffnung (6) und Brennkammeröffnung (30) vorgesehen ist.

13. Heizkessel nach Anspruch 11 oder 12, **dadurch gekennzeichnet, dass** die insbesondere doppelwandige Brennkammertür (29) einen zweiten Zuluftkanal (31) ausbildet, der mit dem Luftkasten (18) der Verteileinrichtung (10) verbunden ist.

14. Heizkessel nach Anspruch 13, **dadurch gekennzeichnet, dass** der Luftkasten (18) einen vorspringenden zweiten Flansch (37) ausbildet, an den der zweite Zuluftkanal (31) der Brennkammertür (29) angeschlossen ist.

## Claims

1. A boiler, comprising a filling chamber (3) having a filling opening (6) for heating material (2), a filling chamber door (4) which can close the filling opening (6), and an air inlet (7) having a distribution device (10) and primary and secondary air ducts (8, 9) connected to the distribution device (10), wherein the distribution device (10) comprises a movably mounted actuating member (11) for the common setting of the air quantities for the secondary air duct (9) and for the primary air duct (8) opening into the filling chamber (3), **characterized in that** the air inlet (7) additionally comprises a heat-up air duct (14) opening into the filling chamber (3) and connected to the distribution device (10), said heat-up air duct being connected to the movable actuating member (11) of the distribution device (10) for the common setting of the air quantities for the heat-up, primary and secondary air duct (14, 8, 9).

2. A boiler according to claim 1, **characterized in that** the actuating member (11) is formed as a rotatably mounted, more particularly plate-shaped, gate valve (33) for the common setting of the air quantities for the heat-up, primary and secondary air duct (14, 8, 9) according to its rotational position (36).

3. A boiler according to claim 1 or 2, **characterized in that** the distribution device (10) comprises a distribution plate (15) which forms connecting openings (12, 13, 16) for the heat-up, primary and secondary air duct (14, 8, 9).

4. A boiler according to claim 3, **characterized in that** the actuating member (11) comprises recesses (17) which interact with the connecting openings (12, 13, 16) of the distribution plate (15) for setting the air quantities guided by the heat-up, primary and secondary air duct (14, 8, 9).

5. A boiler according to one of the claims 1 to 4, **characterized in that** the distribution device (10) comprises an air box (18) accommodating the actuating member (11).

6. A boiler according to claim 5, **characterized in that** the especially double-wall filling chamber door (4) forms a first air feed duct (20) which is connected to the air box (18).

7. A boiler according to claim 6, **characterized in that** the air box (18) forms a protruding flange (24), to which the first air feed duct (20) of the filling chamber door (4) is connected.

8. A boiler according to claim 5, 6 or 7, **characterized in that** the air box (18) is formed in sections by the distribution plate (15).

9. A boiler according to one of the claims 5 to 8, **characterized in that** the air box (18) carries on its exterior side an actuating device (22), especially a servomotor (23), which is operatively connected to the actuating member (11).

10. A boiler according to one of the claims 1 to 9, **characterized in that** the filling chamber (3) comprises the filling opening (6) in its front face wall (5) and a reentrant guide wall (34) beneath the filling opening (6), said guide wall forming the orifices (35) for the heat-up air duct (14).

11. A boiler according to one of the claims 1 to 10, **characterized in that** the boiler (1) comprises a combustion chamber (27) which is arranged beneath the filling chamber (3) and which comprises in its front face wall (32) a combustion chamber opening (30) which can be closed with a combustion chamber door (29) and is connected to the filling chamber (3) via a suction duct (26) into which the secondary air duct (9) opens.

12. A boiler according to claim 11, **characterized in that** the distribution device (10) is provided between the filling opening (6) and the combustion chamber opening (30).

13. A boiler according to claim 11 or 12, **characterized in that** the especially double-wall combustion chamber door (29) forms a second air feed duct (31) which is connected to the air box (18) of the distribution device (10).

14. A boiler according to claim 13, **characterized in that** the air box (18) forms a protruding second flange (37), to which the second air feed duct (31) of the combustion chamber door (29) is connected.

## Revendications

1. Chaudière avec un espace de remplissage (3) présentant une ouverture de remplissage (6) pour une matière calorifère (2), avec une porte d'espace de remplissage (4) pouvant fermer l'ouverture de remplissage (6) et avec une arrivée d'air (7) qui présente un dispositif répartiteur (10) et des conduits d'air primaire et secondaire (8, 9) raccordés au dispositif répartiteur (10), le dispositif répartiteur (10) présentant un organe de réglage (11) supporté de façon mobile pour régler les quantités d'air à la fois pour le conduit d'air secondaire (9) et pour le conduit d'air primaire (8) débouchant dans l'espace de remplissage (3), **caractérisée en ce que** l'arrivée d'air (7) présente en outre un conduit d'air de chauffe (14) débouchant dans l'espace de remplissage (3) et se raccordant au dispositif répartiteur (10), qui est relié avec l'organe de réglage (11) mobile du dispositif répartiteur (10) pour régler ensemble les débits d'air des conduits d'air de chauffe, primaire et secondaire (14, 8, 9).

2. Chaudière selon la revendication 1, **caractérisée en ce que** l'organe de réglage (11) est conçu comme une vanne de réglage (33) supportée avec possibilité de rotation, en particulier en forme de plaque, pour régler ensemble les débits d'air des conduits d'air de chauffe, primaire et secondaire (14, 8, 9) en fonction de sa position de rotation (36).

3. Chaudière selon la revendication 1 ou 2, **caractérisée en ce que** le dispositif répartiteur (10) présente une plaque de répartition (15) qui forme des ouvertures de raccordement (12, 13, 16) pour les conduits d'air de chauffe, primaire et secondaire (14, 8, 9).

4. Chaudière selon la revendication 3, **caractérisée en ce que** l'organe de réglage (11) présente des évidements (17) qui coopèrent avec les ouvertures de raccordement (12, 13, 16) de la plaque de répartition (15) pour régler les quantités d'air acheminées par les conduits d'air de chauffe, primaire et secondaire (14, 8, 9).

5. Chaudière selon l'une des revendications 1 à 4, **caractérisée en ce que** le dispositif répartiteur (10) présente un caisson à air (18) qui reçoit l'organe de réglage (11).

6. Chaudière selon la revendication 5, **caractérisée en ce que** la porte d'espace de remplissage (4), en particulier à double paroi, forme un premier conduit d'arrivée d'air (20) qui communique avec le caisson à air (18).

7. Chaudière selon la revendication 6, **caractérisée en ce que** le caisson à air (18) présente une bride (24) en saillie à laquelle se raccorde le premier conduit d'arrivée d'air (20) de la porte d'espace de remplissage (4).

8. Chaudière selon la revendication 5, 6 ou 7, **caractérisée en ce que** le caisson à air (18) est formé par zones par la plaque de répartition (15).

9. Chaudière selon l'une des revendications 5 à 8, **caractérisée en ce que** le caisson à air (18) porte sur sa face extérieure un dispositif de réglage (22) en liaison active avec l'organe de réglage (11), en particulier un moteur de réglage (23).

10. Chaudière selon l'une des revendications 1 à 9, **caractérisée en ce que** l'espace de remplissage (3) présente dans sa paroi d'extrémité antérieure (5) l'ouverture de remplissage (6) et en dessous de l'ouverture de remplissage (6) une chicane (34) rentrante qui forme des ouvertures d'embouchure (35) pour le conduit d'air de chauffe (14).

11. Chaudière selon l'une des revendications 1 à 10, **caractérisée en ce que** la chaudière (1) présente une chambre de combustion (27) disposée en dessous de l'espace de remplissage (3), qui présente dans sa paroi d'extrémité antérieure (32) une ouverture de chambre de combustion (30) pouvant être fermée par une porte de chambre de combustion (29) et qui communique par un conduit d'aspiration (26) avec l'espace de remplissage (3) dans lequel débouche l'arrivée d'air secondaire (9).

12. Chaudière selon la revendication 11, **caractérisée en ce que** le dispositif répartiteur (10) est prévu entre l'ouverture de remplissage (6) et l'ouverture de chambre de combustion (30).

13. Chaudière selon la revendication 11 ou 12, **caractérisée en ce que** la porte de chambre de combustion (29), en particulier à double paroi, forme un deuxième conduit d'arrivée d'air (31) qui communique avec le caisson à air (18) du dispositif répartiteur (10).

14. Chaudière selon la revendication 13, **caractérisée en ce que** le caisson à air (18) forme une deuxième bride (37) en saillie à laquelle se raccorde le deuxième conduit d'arrivée d'air (31) de la porte de chambre de combustion (29).
